# EUROPEAN PATENT SPECIFICATION

(11) **EP 1 464 551 B1**
(45) Date of publication and mention of the grant of the patent: **24.05.2006**
(21) Application number: 04004857.1
(22) Date of filing: 02.03.2004
(51) Int. Cl.: B60R 21/20

(54) **Airbag device**
Airbagvorrichtung
Dispositif d'airbag

(30) Priority: 02.04.2003 JP 2003099391; 12.12.2003 JP 2003415190
(43) Date of publication of application: 06.10.2004
(73) Proprietor: TAKATA CORPORATION, Minato-ku, Tokyo 106-8510 (JP)
(72) Inventor: Amamori, Ichiro, Tokyo 106-8510 (JP)
(74) Representative: Banzer, Hans-Jörg

(56) References cited:
- EP-A- 0 783 995
- US-A1- 2002 020 995
- PATENT ABSTRACTS OF JAPAN vol. 2000, no. 13, 5 February 2001 (2001-02-05) -& JP 2000 296746 A (TOYO TIRE & RUBBER CO LTD), 24 October 2000 (2000-10-24)

## Description

### [Technical Field]

The present invention relates to an airbag device to protect a vehicle occupant in the event of a collision and the like, and more specifically, it relates to an airbag device assembled while the shape of a folded airbag is maintained by a shape-maintaining component.

### [Background Art]

In general, an airbag device serving as a protector for an occupant in a vehicle and the like is configured to include a folded airbag, an inflator to supply a gas to the airbag, bag holding components, e.g., a base plate and a case, on which the airbag and the inflator are mounted and fixed, and a cover which is disposed to cover the top surface of the folded airbag and which is torn by the inner pressure of the airbag when the airbag device is actuated.

In such an airbag device, the folding shape of the airbag may be maintained with a shape-maintaining component for the purposes of improving the workability in mounting of the above-described cover and of preventing the deformation of the cover due to spontaneous restitution force of the airbag from the folded state during the mounting on a vehicle.

An airbag device including a sheet in the shape of a crank-like long belt serving as the shape-maintaining component and the folding shape of the airbag are described in detail in Japanese Unexamined Patent Application Publication No. 2000-296746, which corresponds to the preamble of claim 1.

Fig. 7 is a sectional view of an airbag device 10 shown in the above-described patent document, and Fig. 8 is a perspective view showing the condition in which an airbag 12 is held with a shape-maintaining component 44.

This airbag device 10 is a driver airbag disposed in the central portion of a steering wheel of an automobile, and is configured to include an airbag 12, an inflator 14, a retainer (referred to as a base plate in the above-described patent document) 16, a bag-mounting ring 18, and a module cover 20.

The airbag 12 has the shape of a bag formed by seaming perimeters of substantially circular two panels (a front panel and a rear panel) with each other, and the rear panel disposed in the inflator 14 side is provided with an opening (mouth portion) 24 for the insertion of the inflator 14 in the central portion.

A mounting flange 14a is provided around the inflator 14, and a gas blowoff portion is provided on the side perimeter surface of the inflator 14, located in the side nearer to the front-end than is the flange 14a.

The base plate 16 is composed of a substantially rectangular plate-shaped portion 16a and leg plate portions 16b bended downward at the edge of the plate-shaped portion 16a.

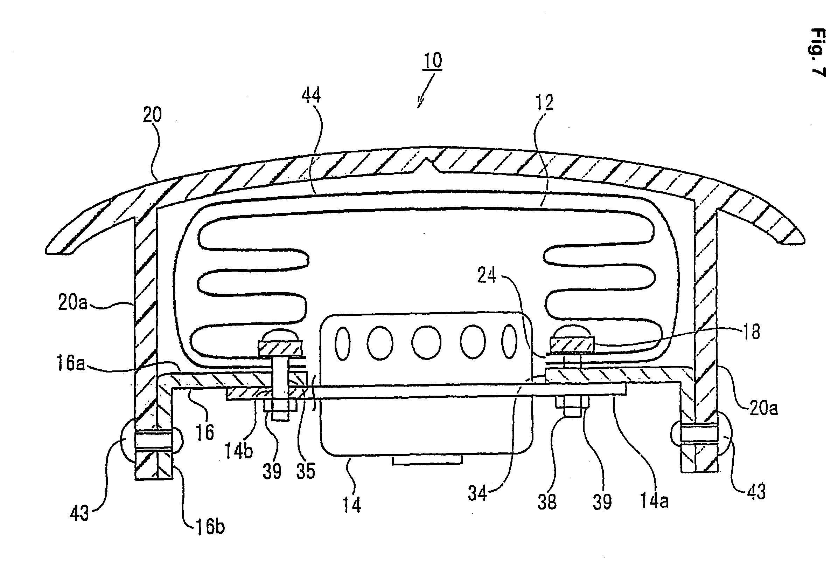

An inflator insertion port 34 is provided in the central portion of the plate-shaped portion 16a of the base plate 16, and a front-end side of the inflator 14 is inserted in this inflator insertion port 34 from the back side, as shown in Fig. 7. The mouth portion 24 of the airbag 12 is mounted and fixed on the perimeter of the inflator insertion port 34 with the mounting rings 18 therebetween.

The mounting ring 18 is a ring-shaped metal component provided with bolts 38 protruding. The bolt 38 is inserted through a bolt through hole 28 provided in the perimeter of the mouth portion 24, and furthermore, is inserted through both a bolt through hole 35 provided in the perimeter of the opening 34 of the base plate 16 and a through hole 14b provided in the flange 14a of the inflator 14, followed by screw-in of a nut 39.

The leg portions 20a of the module cover 20 are fixed to the leg plate portions 16b with rivets 43, so that the module cover 20 is mounted on the base plate 16.

Reference numeral 44 denotes a shape-maintaining component which is put over the airbag 12 folded into a predetermined shape in order to maintain the folding shape.

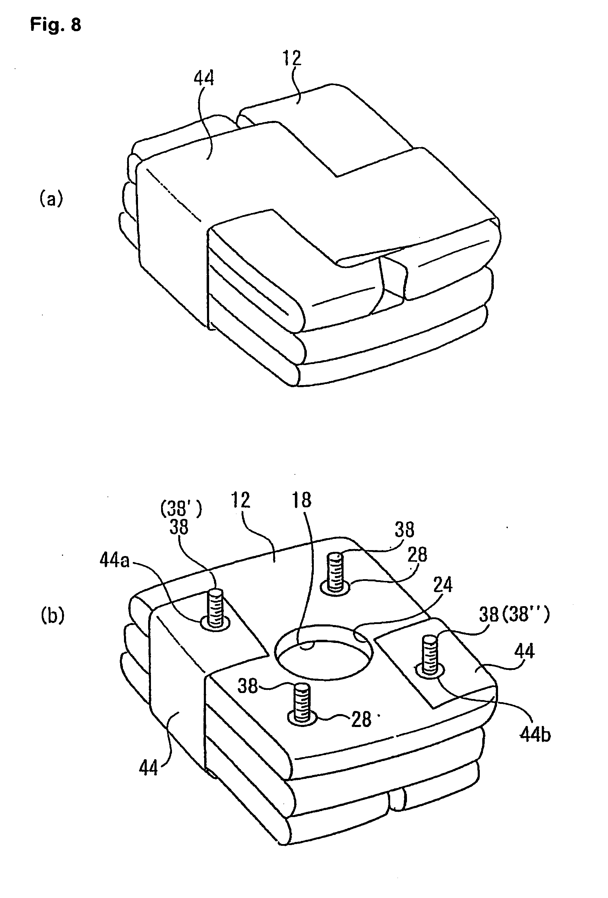

In assembling the airbag device 10, after the airbag 12 is folded, as shown in Fig. 8(a) and 8(b), a bolt 38' of the mounting ring 18 is inserted through a through hole 44a provided at one end portion of the shape-maintaining component 44, the shape-maintaining component 44 is put over the folded airbag 12, and a bolt 38" opposite to the above-described bolt 38' on a diagonal line is inserted through a through hole 44b at the other end portion. In this manner, the shape of the folded airbag 12 is maintained.

The base plate 16 is put on this fold unit of the airbag 12, and bolts 38 are inserted through the bolt through holes 35. The front-end side of the inflator 14 is pushed in the airbag 12 through the opening 34 and the mouth portion 24, and the flange 14a is put on the back of the base plate 16. At this time, the bolts 38 are inserted through the bolt through holes 14b. Nuts 39 are screwed in the bolts 38. Subsequently, the module cover 20 is put over the folded-airbag unit, and is fixed with rivets 43.

In the assembling operation of this airbag device 10, when the module cover 20 is mounted on the base plate 16 while being put over the fold unit of the airbag 12, the shape-maintaining component 44 maintains the folding shape of the airbag 12. Consequently, the cover 20 is readily put over the airbag 12 and, therefore, the airbag device 10 has excellent workability in assembling. Even after the airbag device 10 is mounted on a vehicle, since the shape-maintaining component 44 maintains the folding shape of the airbag 12, the force caused by the spontaneous restitution of the shape from the folded state can be reduced while the force is applied to the cover 20 and, therefore, the deformation of the cover 20 can be prevented.

When the airbag 12 inflates by the gas discharged from the inflator 14 in the event of a collision of the vehicle, the shape-maintaining component 44 is torn, and the airbag 12 pushes the module cover 20 open so as to deploy.

As described above, the airbag is folded into a predetermined shape in assembling the airbag device 10. An example of this folding method is described in detail in Japanese Unexamined Patent Application Publication No. 2002-316605.

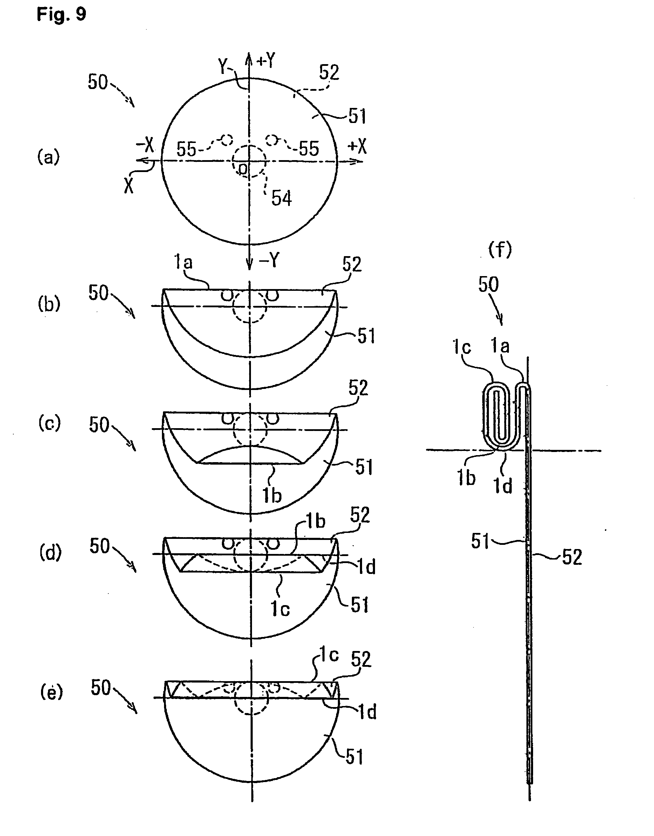

Figs. 9 to 13 are diagrams for illustrating the method for folding an airbag in the above-described patent document.

This airbag 50 is provided by seaming a front panel 51 and a rear panel 52 with each other, and the rear panel 52 is provided with a gas inlet (mouth portion) 54 and a vent hole 55.

As shown in Fig. 9(a), the front panel 51 of the airbag 50 is allowed to face upward, and the airbag 50 is put on a planar work table while taking the shape of a flat plate. In this condition, the two straight lines intersecting at a center O serves as reference axes X and Y, and specify horizontal and vertical directions.

As shown in Fig. 9(b), the airbag 50 is folded back along a predetermined first bend line 1a set close to the gas inlet 54, so that the part folded back becomes an upper part. Subsequently, as shown in Figs. 9(c) to 9(e) and 9(f), the end portion of the perimeter of the upper part is folded back along a predetermined bend line 1b, and furthermore, folding back is carried out sequentially along bend lines 1c and 1d, so as to form a winding in the front panel side. In this manner, an upper deployment portion 61 is formed.

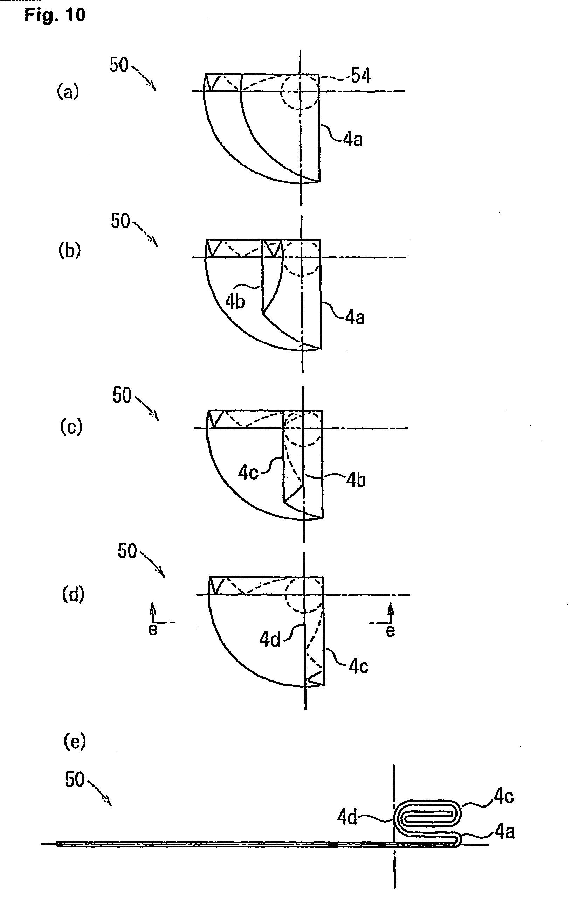

As shown in Fig. 10(a), the right side part is folded back along a predetermined first bend line 4a set close to the gas inlet 54, so that the right side part folded back becomes an upper part. Subsequently, as shown in Figs. 10(b) to 10(d) and 10(e), the end portion of the perimeter of the upper part is folded back along a predetermined bend line 4b, and furthermore, folding back is carried out sequentially along bend lines 4c and 4d, so as to form a winding in the front panel side. In this manner, a right deployment portion 64 is formed.

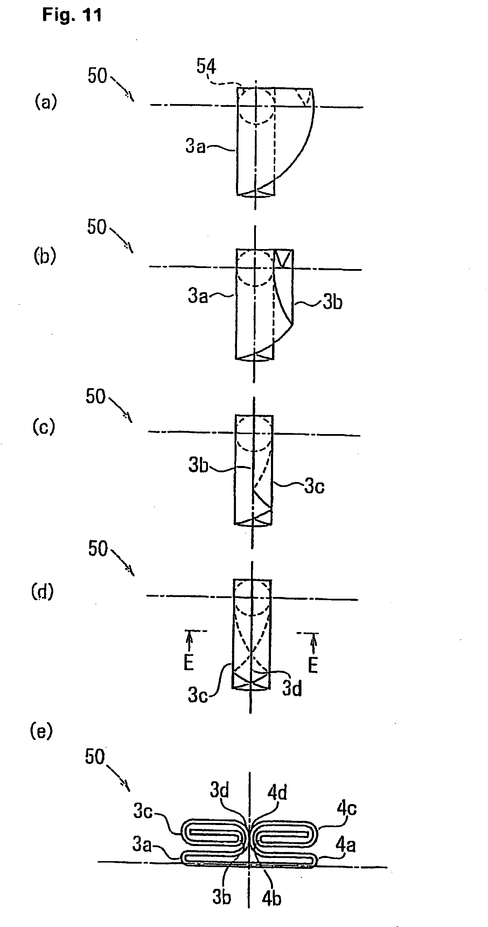

As shown in Fig. 11(a), the left side part is folded back along a predetermined first bend line 3a set close to the gas inlet 54, so that the left side part folded back becomes an upper part. Subsequently, as shown in Figs. 11(b) to 11(d) and 11(e), the end portion of the perimeter of the upper part is folded back along a predetermined bend line 3b, and furthermore, folding back is carried out sequentially along bend lines 3c and 3d, so as to form a winding in the front panel side. In this manner, a left deployment portion 63 is formed.

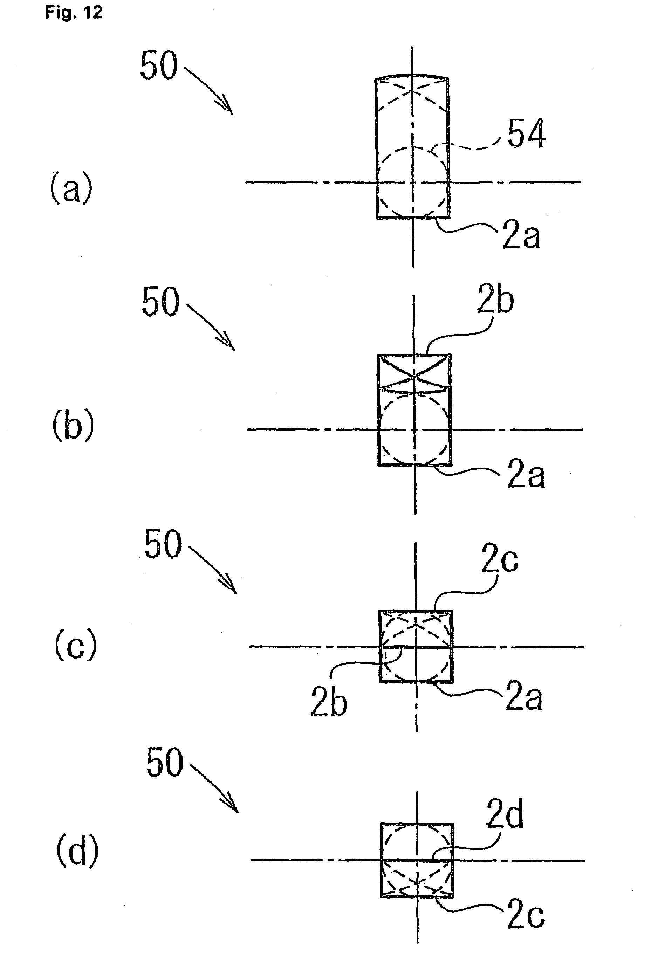

As shown in Fig. 12(a), the lower side part is folded back along a predetermined first bend line 2a set close to the gas inlet 54, so that the lower side part folded back becomes an upper part. Subsequently, as shown in Figs. 12(b) to 12(d), the end portion of the perimeter of the upper part is folded back along a predetermined bend line 2b, and furthermore, folding back is carried out sequentially along bend lines 2c and 2d, so as to form a winding in the occupant side. In this manner, a lower deployment portion 62 is formed.

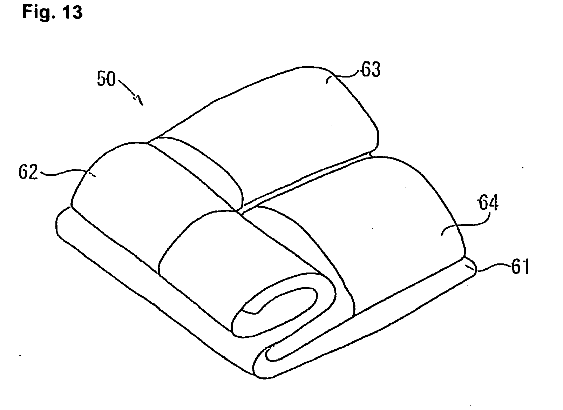

Consequently, as shown in Fig. 13, the right deployment portion 64 and the left deployment portion 63 are put on in the occupant side of the folded airbag, and the lower deployment portion 62 is further put on these deployment portions 63 and 64 in the occupant side.

Japanese Unexamined Patent Application Publication No. 9-30425 discloses that in an airbag device of the type in which only the module cover recedes and a horn switch is turned on so as to sound a horn when a module cover is pushed, a folded airbag is bound to a retainer with a band, and a space for recession of the module cover is formed between the module cover and the top surface of the folded airbag. In this case, the module cover is mounted on the retainer while being movable in a vertical direction (in the direction of approaching or receding from the occupant) and, in addition, an energizing device, e.g., spring, to energize the module cover upward is provided.

Airbag devices of the type in which only the module cover recedes and a horn switch is turned on so as to sound a horn when a module cover is pushed are also described in Japanese Unexamined Utility Model Registration Application Publication No. 6-53324, Japanese Unexamined Utility Model Registration Application Publication No. 6-53365, and Japanese Unexamined Utility Model Registration Application Publication No. 5-92004.

### [Problems to be Solved by the Invention]

With respect to the airbag device shown in Fig. 7, disclosed in Japanese Unexamined Patent Application Publication No. 2000-296746, an adequate space (clearance) seems to be included in the inside of the airbag 12 in the drawing, and the front-end side of the inflator 14 seems to be readily inserted into the airbag 12 through the inflator insertion port 34 and the mouth portion 24 in the drawing. However, this is because Fig. 7 is a schematic diagram, and actually, the airbag is folded back multiple times, and is densely folded with no clearance, so that the folded-airbag unit is provided. In the condition immediately after the folding of the airbag (before the insertion of the inflator), since the densely folded airbag is disposed in layers on the plate-shaped portion 16a of the base plate 16, the top of the inflator insertion port of the base plate 16 is in the condition of being tightly sealed with the folded airbag. In assembling the airbag device with the shape-maintaining component, the front-end side of the inflator 14 is pushed into this folded airbag through the opening 34. Therefore, the operator is required to have a significant muscle force and, in addition, it takes much time to mount the inflator.

It is an object of the present invention to overcome the above-mentioned known problems, and to provide an airbag device with an airbag shape-maintaining component, wherein an inflator is very readily mounted, and an assembling efficiency is excellent.

### [Means for Solving the Problems]

According to the present invention, this object is achieved by an airbag device according to claim 1. The dependent claims define preferred and advantageous embodiments of the invention.

The airbag device of the present invention includes an airbag having a front portion facing an occupant during inflation and a rear portion opposite to the front portion; an inflator to inflate the airbag; a retainer on which the airbag and the inflator are mounted; and a shape-maintaining component to envelop a folded airbag and to maintain the folding shape, wherein a front-end side of the inflator is included in the inside of a folded-airbag unit through an inflator insertion port provided on the retainer, the shape-maintaining component is connected to the above-described front portion of the above-described airbag, and the front-end side of the inflator is included between the airbag front portion connected to the shape-maintaining component and the inflator insertion port of the retainer.

In the airbag device according to the invention, the junction of the above-described shape-maintaining component and the airbag front portion is preferably located in the direction of extension of the inflator insertion direction at the above-described inflator insertion port.

In the airbag device the above-described junction may be located in the front side of the above-described folded airbag, and a portion of the above-described airbag in the vicinity of the junction extends from this front side to the periphery of the above-described inflator insertion port.

In the airbag device according to the invention, preferably a low-strength portion is provided in the above-described shape-maintaining component while surrounding the junction of the above-described shape-maintaining component and the airbag, and the shape-maintaining component is torn along the low-strength portion when the airbag inflates.

### [Advantages]

According to the airbag device of the present invention, since the shape-maintaining component is connected to the front portion of the airbag, the front portion of the airbag is located away from the inflator insertion port because the front portion of the airbag is pulled by the shape-maintaining component. Consequently, a space is generated between this airbag front portion and the inflator insertion port and, thereby, the front-end side of the inflator can be readily inserted into the folded-airbag unit.

In the present invention, preferably, the junction of the shape-maintaining component and the airbag front portion is located in the direction of extension of the inflator insertion direction at the above-described inflator insertion port. In this configuration, the above-described space extends from the inflator insertion port toward the inflator insertion direction and, therefore, the inflator is readily inserted.

In this case, preferably, the above-described junction is located in the front side of the above-described folded airbag, and a portion of the above-described airbag in the vicinity of this junction extends from this front side to the periphery of the above-described inflator insertion port. In this configuration, the size of the above-described space in the vicinity of the inflator insertion port is increased and, therefore, the inflator can be further readily inserted.

In the present invention, the low-strength portion may be provided in the shape-maintaining component while surrounding the junction of the shape-maintaining component and the airbag, and the shape-maintaining component may be torn along the low-strength portion when the airbag inflates. In this configuration, the shape-maintaining component is torn along this low-strength portion when the airbag inflates. Consequently, only the portion surrounded by this low-strength portion is left as a remaining piece attached to the inflating airbag.

### [Best Mode for Carrying Out the Invention]

An embodiment of the present invention will be described below with reference to the drawings.

### [Brief Description of the Drawings]

Fig. 1 is a vertical sectional view of the airbag device according to the embodiment.
Fig. 2(a) is a perspective view of the airbag of the airbag device according to the embodiment, and Fig. 2(b) is a sectional view of the section indicated by a line B-B shown in Fig. 2(a).
Fig. 3 is an exploded sectional view of the airbag device according to the embodiment.
Fig. 4 is a perspective view of a folded-airbag unit of the airbag device according to the embodiment, viewed from above.
Fig. 5 is a perspective view showing the condition in which the shape-maintaining component of the folded-airbag unit shown in Fig. 4 is spread out, i.e. before envelopment with the shape-maintaining component.

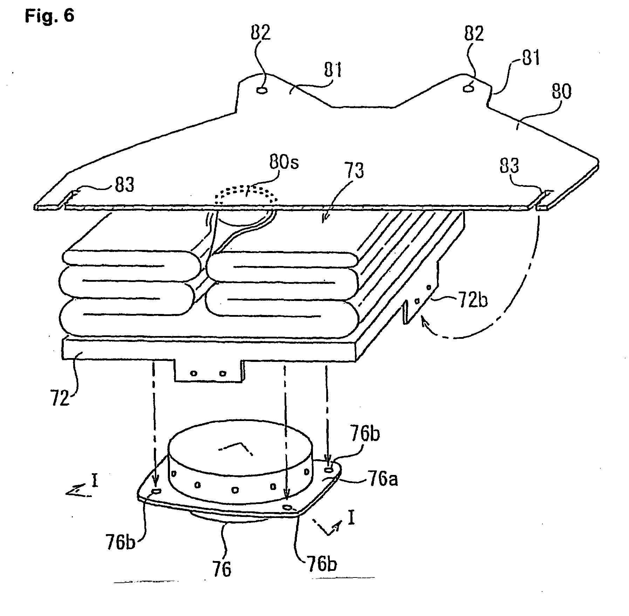

Fig. 6 is a perspective view of the condition shown in Fig. 5, viewed from above.
Fig. 7 is a sectional view of a known airbag device.
Fig. 8 is a perspective view of a folded-airbag unit of a known airbag device.
Fig. 9 is a diagram for illustrating a method for folding an airbag.
Fig. 10 is a diagram for illustrating a method for folding an airbag, wherein Fig. 10(e) is a sectional view along line e-e in Fig. 10(d).
Fig. 11 is a diagram for illustrating a method for folding an airbag, wherein Fig. 11(e) is a sectional view along line E-E in Fig. 11(d).
Fig. 12 is a diagram for illustrating a method for folding an airbag.
Fig. 13 is a diagram for illustrating a method for folding an airbag.
Fig. 14 is a diagram for illustrating a shape-maintaining component according to another embodiment.

An airbag device 71 according to an embodiment of the invention is configured to include a retainer (base plate) 72, an airbag 73 mounted on this retainer 72 with an airbag-mounting ring 74, an inflator 76 to inflate this airbag 73, a shape-maintaining component 80 to maintain the shape of the folded airbag 73, a module cover 75 covering a folded-airbag unit, and the like.

The retainer 72 is provided with an inflator insertion port 72a in the central portion, and through holes 72c for bolts 85, described below, are provided in the perimeter of this inflator insertion port 72a. A plurality of leg portions 72b for mounting the module cover are provided on the edge of the retainer 72 while standing. Leg portions 75a of the module cover 75 are fixed to the leg portions 72b with rivets 78.

The inflator 76 has a flange 76a, the bolts 85 protruding from the airbag-mounting ring 74 are inserted through the airbag 73, the retainer 72, and the flange 76a, and nuts 86 are screwed in. In this manner, the inflator 76 is fixed to the retainer 72 together with the airbag 73.

The edge portion of the shape-maintaining component 80 is held between the retainer 72 and the flange 76a, as described in detail.

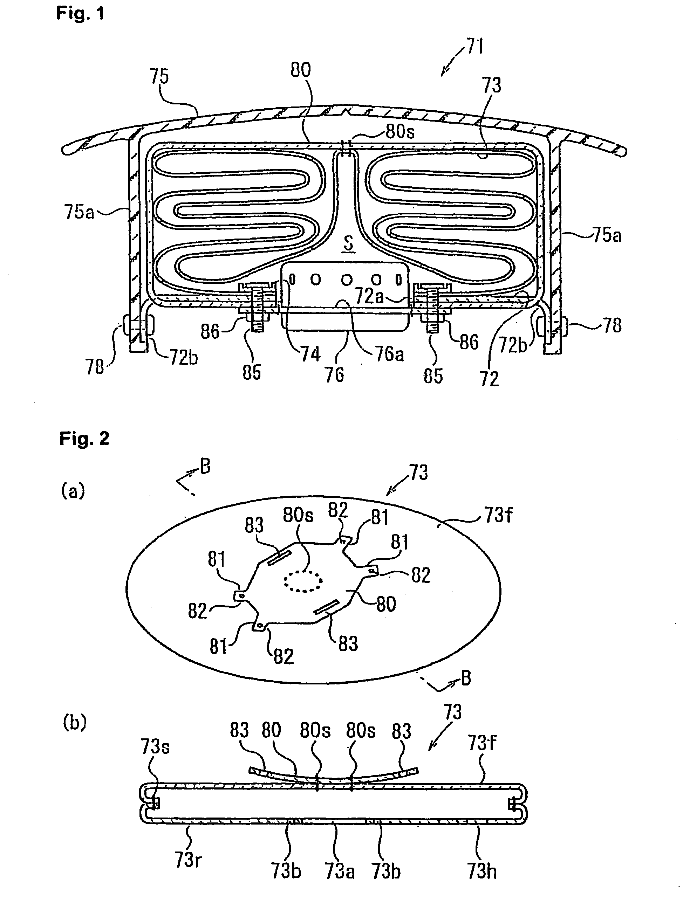

As shown in Fig. 2(b), this airbag 73 is a driver airbag having the shape of a bag formed by seaming perimeters of a circular rear panel 73r and a front panel 73f overlapping each other with a seam thread 73s. An opening (mouth portion) 73a for insertion of the inflator is provided in the center of the rear panel 73r, and the through holes 72c for the above-described bolts 85 are provided in the perimeter of the opening. furthermore, the rear panel 73r is provided with a vent hole 73h to discharge the gas from the airbag. Although not shown in the drawing, a reinforcing cloth is mounted around the opening 73a by seaming.

In the present embodiment, the shape-maintaining component 80 to maintain the shape of the folded airbag 73 has the shape of a sheet. The central portion of this shape-maintaining component 80 and the central portion of the front panel 73f are seamed with a seam thread 80s.

This shape-maintaining component 80 is provided with a flap-shaped extension portion 81 at each of the four corners, and each extension portion 81 is provided with a small hole 82. Slits 83 are provided along opposed two sides of the shape-maintaining component 80.

The procedure of folding of the airbag 73 is not specifically limited. The airbag 73 is folded in order that the area projected onto the retainer 72 becomes equivalent to that of the retainer 72. The mounting ring 74 is inserted through the opening 73a into the airbag 73, each bolt 85 is inserted through the bolt through hole 73b and, thereafter, the airbag 73 is folded.

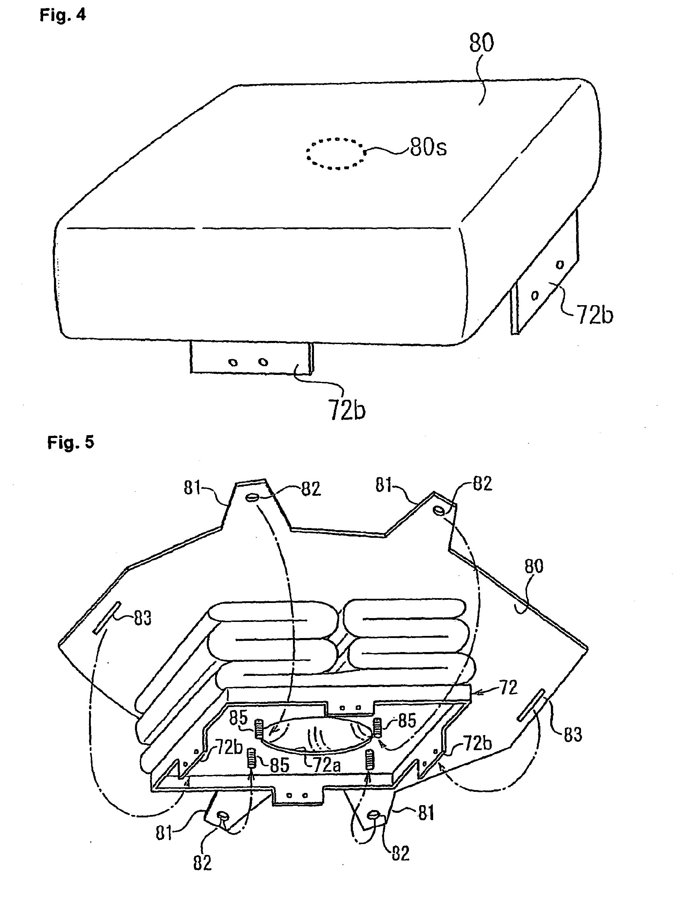

The retainer 72 is put on this folded airbag, and bolts 85 are inserted through the bolt through holes 72c. Subsequently, as shown in Fig. 5, the bolts 85 are inserted through respective small holes 82 of the shape-maintaining component 80 and, in addition, a pair of leg portions 72b of the retainer 72 are inserted through the slits 83.

In this manner, as shown in Fig. 4, the shape of the folded airbag is maintained by the shape-maintaining component 80.

This shape-maintaining component may be provided with other extension portions and small holes for temporary fixing, and the bolts 85 of the mounting ring may be inserted through the small holes for temporary fixing so as to temporarily fix the shape-maintaining component and the folded airbag before the folded airbag and the shape-maintaining component are mounted on the retainer.

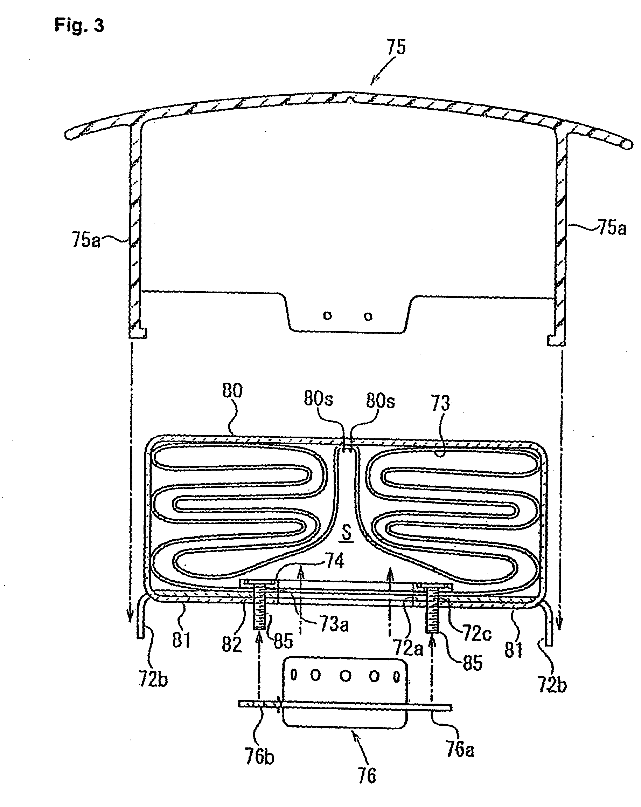

In this folded-airbag unit, as shown in Fig. 1 and Fig. 3, the shape-maintaining component 80 and the central portion of the front panel 73f are seamed, and the central portion of the front panel 73f is pulled up to the front side (occupant side) of the folded airbag by the shape-maintaining component 80. Consequently, a space S is formed at the back of the inflator insertion port 72a of the retainer 72 by this pulling up.

As shown in Fig. 3, the inflator 76 is mounted on the resulting assembly of the folded-airbag unit and the retainer 72. In this case, since the space S is included in the inside of this assembly, the front-end side of the inflator 76 is smoothly inserted through the inflator insertion port 72a and the airbag opening 73a into the folded-airbag unit in the assembly.

In the present embodiment, as shown in Figs 1 and 3, the junction of this shape-maintaining component 80 and the airbag front portion through the use of the seam thread 80s is located in the front side of the folded airbag in the direction of extension of the insertion direction of the inflator 76 at the inflator insertion port 72a. The periphery of the junction in the front portion of the airbag divergently extends to the perimeter of the inflator insertion port 72a while substantially taking the shape of a truncated cone. Consequently, a space S adequate for readily inserting the front-end side of the inflator 76 is included at the back of the inflator insertion port 72a and, therefore, the workability in mounting of the inflator 76 becomes very excellent.

The flange 76a of the inflator 76 is put on the back of the retainer 72. At this time, the bolts 85 are inserted through the bolt through holes 76b. Nuts 86 are screwed in the bolts 85. Subsequently, the module cover 75 is put over the folded-airbag unit, and is fixed with rivets 78. In this manner, the airbag device shown in Fig. 1 is configured.

With respect to the airbag device having such a configuration, in the event of a collision of the vehicle, the inflator 76 discharges a gas and, thereby, the airbag 73 inflates. At this time, the shape-maintaining component 80 is torn in the vicinity of the small holes 82 and the slits 83 and, thereby, the airbag 73 is released from the constraint of the shape-maintaining component 80, so that the airbag 73 pushes the module cover 75 open so as to widely deploy in the room of the vehicle.

As described above, in this airbag device, since the space S is included in the folded-airbag unit, the mounting operation of the inflator 76 is significantly simplified. As a matter of course, since the shape of the folded airbag is maintained by the shape-maintaining component 80, the module cover 75 is readily mounted and, in addition, the shape of the folded airbag is maintained after being mounted on the vehicle.

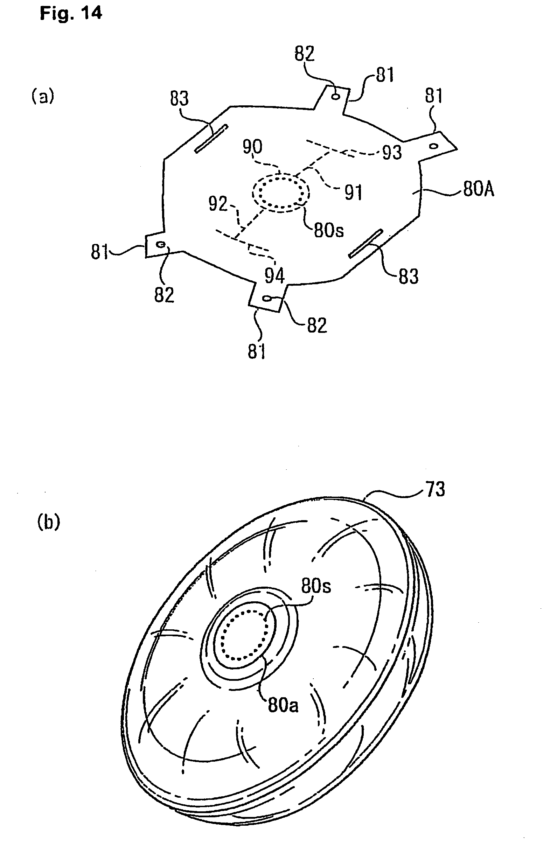

In the present invention, the shape-maintaining component may be partially provided with a low-strength portion, e.g., an incision, so that the shape-maintaining component 80 may be torn along this low-strength portion when the airbag inflates. For example, as in the shape-maintaining component 80A shown in Fig. 14(a), a circular low-strength portion 90 surrounding the perimeter of the seams of the seam thread 80s in the central portion, radial low-strength portions 91 and 92 radially extending from this circular low-strength portion 90, and intersecting low-strength portions 93 and 94 extending from the end of the radial low-strength portions 91 and 92 in the direction orthogonal thereto may be provided. In this case, the shape-maintaining component 80A is torn along the low-strength portions 91 to 94 when the airbag inflates, and only a circular remaining piece 80A is left on the front panel of the deployed airbag, as shown in Fig. 14(b).

In the above-described embodiment, seams of the seam thread 80s have the shape of a circle, but may have various shapes, e.g., a straight line, a cross, and a letter H. The location of the seam of the shape-maintaining component and the airbag may be a location other than the center of the front panel.

In the above-described embodiment, the module cover 75 is mounted on the retainer 72 by fixation with the rivets 78. However, the present invention can be applied to the airbag device of the type in which the module cover is bound to the retainer while being movable in a vertical direction, and only a module cover recedes and a horn switch is turned on so as to sound a horn when the module cover is pushed, as in the above-described Japanese Unexamined Utility Model Registration Application Publication No. 5-92004, Japanese Unexamined Utility Model Registration Application Publication No. 6-53324, Japanese Unexamined Utility Model Registration Application Publication No. 6-53365, Japanese Unexamined Patent Application Publication No. 9-30425, and the like.

The above-described embodiment is related to the driver airbag device. However, the present invention can be applied to other airbags, e.g., a passenger airbag.

## Claims

1. An airbag device comprising:
an airbag (73) having a front portion facing an occupant during inflation and a rear portion opposite to the front portion;
an inflator (76) to inflate the airbag (73);
a retainer (72) to which the airbag (73) and the inflator (76) are mounted; and
a shape-maintaining component (80; 80A) to envelop a folded airbag and to maintain the folding shape,
wherein a front-end side of the inflator (76) is included in the inside of a folded-airbag unit through an inflator insertion port (72a) provided on the retainer (72),
**characterized in that**
the shape-maintaining component (80; 80A) is connected to the front portion of the airbag, and
that the front-end side of the inflator (76) is included between the airbag front portion connected to the shape-maintaining component (80; 80A) and the inflator insertion port (72a) of the retainer (72).

2. The airbag device according to Claim 1, wherein the junction of the shape-maintaining component (80; 80A) and the airbag front portion is located in the direction of extension of the inflator insertion direction at the inflator insertion port (72a).

3. The airbag device according to Claim 2, wherein the junction is located in the front side of the folded airbag (73), and a portion of the airbag (73) in the vicinity of this junction extends from this front side to the periphery of the inflator insertion port (72a).

4. The airbag device according to any one of Claims 1 to 3, wherein a low-strength portion (90, 91, 92, 93, 94) is provided in the shape-maintaining component (80A) while surrounding the junction of the shape-maintaining component (80A) and the airbag (73), and the shape-maintaining component (80A) is torn along the low-strength portion (90, 91, 92, 93, 94) when the airbag inflates.

## Patentansprüche

1. Airbagvorrichtung umfassend:
einen Airbag (73), welcher einen Vorderabschnitt, der einem Insassen während eines Aufblasens gegenüberliegt, und einen Rückabschnitt, der dem Vorderabschnitt gegenüberliegt, aufweist;
eine Aufblasvorrichtung (76), um den Airbag (73) aufzublasen;
einen Halter (72), an welchem der Airbag (73) und die Aufblasvorrichtung (76) montiert sind; und
eine Form erhaltende Komponente (80; 80A), um einen gefalteten Airbag zu umgeben und die gefaltete Form zu erhalten,
wobei eine Vorderendseite der Aufblasvorrichtung (76) in dem inneren einer Einheit des gefalteten Airbags durch eine Aufblasvorrichtungseinführungsöffnung (72a) aufgenommen ist, welche auf dem Halter (72) vorhanden ist,
**dadurch gekennzeichnet,**
**dass** die Form erhaltende Komponente (80; 80A) mit dem Vorderabschnitt des Airbags verbunden ist, und
**dass** die Vorderendseite der Aufblasvorrichtung zwischen dem Airbagvorderabschnitt, welcher mit der Form erhaltenden Komponente (80; 80A) verbunden ist, und der Aufblasvorrichtungseinführungsöffnung (72a) des Halters (72) aufgenommen ist.

2. Airbagvorrichtung nach Anspruch 1, wobei die Berührungszone der Form erhaltenden Komponente (80; 80A) und des Airbagvorderabschnitts in der Richtung einer Verlängerung der Aufblasvorrichtungseinführungsrichtung bei der Aufblasvorrichtungseinführungsöffnung (72a) angeordnet ist.

3. Airbagvorrichtung nach Anspruch 2, wobei die Berührungszone in der Vorderseite des gefalteten Airbags (73) angeordnet ist, und sich ein Abschnitt des Airbags (73) in der Nähe dieser Berührungszone von dieser Vorderseite zu dem Umfang der Aufblasvorrichtungseinführungsöffnung (72a) erstreckt.

4. Airbagvorrichtung nach einem der Ansprüche 1 bis 3, wobei ein Abschnitt (90, 91, 92, 93, 94) mit geringer Festigkeit in der Form erhaltende Komponente (80A) vorhanden ist während sie die Berührungszone der Form erhaltenden Komponente (80A) und des Airbags (73) umgibt, und wobei die Form erhaltende Komponente (80A) entlang des Abschnitts (90,91, 92, 93, 94) mit geringer Festigkeit reißt, wenn der Airbag aufgeblasen wird.

## Revendications

1. Dispositif de coussin gonflable comprenant :
- un coussin gonflable (73) ayant une partie avant faisant face à un passager pendant le gonflage et une partie arrière opposée à la partie avant ;
- un gonfleur (76) pour gonfler le coussin gonflable (73) ;
- un dispositif de retenue (72) sur lequel le coussin gonflable (73) et le gonfleur (76) sont montés ; et
- un composant de maintien de forme (80 ; 80A) pour envelopper un coussin gonflable plié et pour maintenir la forme de pliage,
dans lequel le côté d'extrémité avant du gonfleur (76) est inclus à l'intérieur d'une unité de coussin gonflable plié par le biais d'un orifice d'insertion (72a) de gonfleur prévu sur le dispositif de retenue (72),
**caractérisé en ce que** le composant de maintien de forme (80 ; 80A) est raccordé à la partie avant du coussin gonflable, et
**en ce que** le côté d'extrémité avant du gonfleur (76) est compris entre la partie avant du coussin gonflable raccordée au composant de maintien de forme (80 ; 80A) et l'orifice d'insertion (72a) de gonfleur du dispositif de retenue (72).

2. Dispositif de coussin gonflable selon la revendication 1, dans lequel la jonction du composant de maintien de forme (80 ; 80A) et de la partie avant du coussin gonflable est située dans la direction de l'extension de la direction d'insertion du gonfleur au niveau de l'orifice d'insertion (72a) de gonfleur.

3. Dispositif de coussin gonflable selon la revendication 2, dans lequel la jonction est située dans le côté avant du coussin gonflable plié (73) et une partie du coussin gonflable (73) à proximité de cette jonction s'étend à partir de ce côté avant vers la périphérie de l'orifice d'insertion (72a) de gonfleur.

4. Dispositif de coussin gonflable selon l'une quelconque des revendications 1 à 3, dans lequel une partie à faible résistance (90, 91, 92, 93, 94) est prévue dans le composant de maintien de forme (80A) tout en entourant la jonction du composant de maintien de forme (80A) et du coussin gonflable (73), et le composant de maintien de forme (80A) est déchiré le long de la partie à faible résistance (90, 91, 92, 93, 94) lorsque le coussin gonflable se gonfle.
